# EUROPÄISCHE PATENTSCHRIFT

(11) **EP 0 576 494 B1**
(45) Veröffentlichungstag und Bekanntmachung des Hinweises auf die Patenterteilung: **22.05.1996**
(21) Anmeldenummer: 92906619.9
(22) Anmeldetag: 18.03.1992
(51) Int. Cl.: B01D 15/02, B01D 15/08, B01D 53/02, G01N 30/56, G01N 30/38

(54) **KONTINUIERLICHE CHROMATOGRAPHIE**
CONTINUOUS CHROMATOGRAPHY
CHROMATOGRAPHIE EN CONTINU

(30) Priorität: 18.03.1991 DE 4108820
(43) Veröffentlichungstag der Anmeldung: 05.01.1994
(73) Patentinhaber: REUTER, Karl, Dr., D-79110 Freiburg (DE)
(72) Erfinder: REUTER, Karl, Dr., D-79110 Freiburg (DE)
(86) Internationale Anmeldenummer: EP9200596
(87) Internationale Veröffentlichungsnummer: WO9216275

(56) Entgegenhaltungen:
- EP-A- 0 168 140
- AU-A- 433 510
- GB-A- 1 043 354
- US-A- 3 417 548
- US-A- 3 503 712
- US-A- 3 511 028

## Beschreibung

Die Erfindung betrifft ein Verfahren und eine Vorrichtung zur kontinuierlichen Chromatographie (CC).

Unter Chromatographie versteht man ein Trennverfahren, bei dem die zu trennenden Substanzen üblicherweise über Phasen verteilt aufgrund physikalischer und chemischer Unterschiede und Prinzipien voneinander getrennt, durch geignete Detektionsverfahren nachgewiesen und durch Elution isoliert werden können. Von den in der Chromatographie verwendeten Phasen ist eine Phase unbeweglich (stationär) und besitzt in der Regel eine große Oberfläche, die andere ist beweglich (mobil) und bewegt sich über oder durch die stationäre Phase. Die stationäre Phase kann dabei ein Feststoff (Adsorbens) oder eine Flüssigkeit sein, wobei im letzteren Fall die Unbeweglichkeit der Phase und ihre große Oberfläche dadurch erreicht werden, daß die Flüssigkeit als dünner Film auf einem porösen feinkörnigen Träger aufgebracht wird. Die mobile Phase ist in der Regel eine mit der stationären Phase nicht mischbare Flüssigkeit oder ein Gas. Aufgrund dieser Unterschiede unterscheidet man im allgemeinen zwischen einer Flüssig-Fest-Chromatographie, einer Flüssig-Flüssig-Chromatographie, einer Gas-Fest-Chromatographie und einer Gas-Flüssig-Chromatographie. Vom Trennprinzip her ist zwischen einer Adsorptions- und Verteilungs-Chromatographie zu unterscheiden, wobei die Auftrennung von Substanzgemischen durch die verschiedene Retention der Einzelstoffe an der stationären Phase zustande kommt, wobei die Auflösung von mehreren Faktoren, insbesondere auch von der unterschiedlichen Retention der Einzelsubstanzen an der stationären Phase, abhängt. Da die Trennleistung einer Chromatographiesäule insbesondere auch von der Korngröße der stationären Phase (z.B. Größe der Oberfläche, Zonenverbreiterung durch unterschiedliche Weglängen) abhängig ist, arbeitet man bei der sogenannten Hochleistungs- (oder Hochdruck-) Flüssigkeits-Chromatographie (HPLC) mit wesentlich mit feinkörnigeren Materialien (5 bis 30 µm) als bei der Gel-Chromatographie (35 bis 75 µm) oder der Säulen-Chromatographie (120 bis 200 µm); durch die Feinkörnigkeit der Adsorbentien wird allerdings die Anwendung hoher Drucke (bis zu 400 bar) erforderlich.

Zur Durchführung der Chromatographie wird ein Substanzgemisch punktförmig am Start (auf der Säule, Dünnschicht usw.) aufgebracht und mittels der mobilen Phase (Gas bei GC, Lösungsmittel bei HPLC) transportiert. Dabei wird Je nach dem Adsorptions-/Desorptions-Gleichgewicht einer bestimmten Substanz diese unterschiedlich schnell durch oder über die stationäre Phase wandern, wobei die maximale Geschwindigkeit die Geschwindigkeit der mobilen Phase ist.

Aus der US-A-3 511 028 ist ein chromatographisches Verfahren zur Trennung eines Stoffgemisches bekannt, bei dem man ein Trägergas durch eine ringförmige offene Säule (die von der Innenwand eines äußeren und der Außenwand eines inneren Zylinders gebildet wird, wobei die beiden Zylinder konzentrisch angeordnet sind) hindurchströmen läßt, wobei mindestens eine Wand mit einer Trennflüssigkeit beschichtet ist, die Wände um ihre Achse rotieren, das Gas in eine im wesentlichen parallel zu der Säulenachse verlaufende Strömungsrichtung gezwungen wird, die zu trennende gasförmige Mischung auf die Säule an einem bestimmten Punkt am Ende dieser Säule eingebracht wird, und die Komponenten dieser Mischung an bestimmten, voneinander getrennten Punkten am anderen Ende der Säule entnommen werden.

Die bisher bekannten Chromatographie-Verfahren besitzen aber verschiedene Nachteile: so ist z.B. eine elektronisch gesteuerte Selbstoptimierung während eines laufenden Trennverfahrens kaum sinnvoll oder überhaupt durchführbar. Bei ähnlichen Retentionszeiten für verschiedene Substanzen gelingt die Trennung oft nur unvollständig; die Belegungssituation der adsorptiven Phase während einer präparativen Trennung (die der Wanderungszone eines noch ungetrennten Substanzgemisches entspricht) entspricht im Regelfall einer lokalen Überladung der stationären Phase, z.B. einer Säule, und die volle Trennleistung wird erst gegen das Ende zu erreicht, wenn die zu trennenden Substanzen bereits über einen größeren Säulenbereich verteilt sind, d.h. schon weitgehend aufgetrennt sind; der größte Teil der adsorptiven Phase (derjenige außerhalb der Wanderungszone) nimmt dagegen am momentanen Trenngeschehen nicht teil.

Die Verteilung erfolgt immer nur zwischen einem adsorptiven Medium (stationäre Phase) und dem Laufmittel (mobile Phase), aber nicht zwischen zwei weitgehend frei wählbaren Adsorptionsmedien, wie z.B. zwischen Adsorptionsmedien, die durch eine geeignete Wahl ihrer physikalischen, chemischen und/oder chiralen Eigenschaften für eine gute Trennung bestimmter Substanzen spezifisch auswählbar sind (wie z.B. zwei Enantiomere, unterschiedlich polare, sauer/basische oder gegensinnig (und in der Stärke regelbare) elektrisch geladene Sorptionsmedien).

Außerdem ist auch die Temperatur von stationärer Phase und mobiler Phase zwangsläufig etwa gleich, und es lassen sich unterschiedliche Temperaturen der beiden Phasen nicht einstellen.

Aufgabenstellung der vorliegenden Erfindung ist es, die mit den bisher bekannten Chromatographie-Verfahren verbundenen Nachteile zu vermeiden, und ein Chromatographie-Verfahren bereitzustellen, das sich für einen kontinuierlichen Betrieb eignet, wobei auch eine elektronisch gesteuerte Selbstoptimierung möglich ist, und das aufgrund frei wählbarer und für bestimmte Substanzen selektiv einstellbarer physikalischer, chemischer und/oder chiraler Bedingungen der verschiedenen Trennphasen eine rasche, kontinuierlich durchführbare und gute Trennung ermöglicht, wobei sich das Verfahren auch für einen präparativen oder auch technischen Maßstab eignet.

Diese Aufgabenstellung wird mit der vorliegenden Erfindung gelöst.

Gegenstand der Erfindung ist ein Verfahren zur Trennung eines Stoffgemisches durch Sorption der Mischungskomponenten an zwei unterschiedlichen Sorptionsmitteln gemäß Patentanspruch 1.

Zweckmäßige Ausführungsformen dieses Verfahrens sind Gegenstand der Ansprüche 2 bis 10.

Weiterer Gegenstand der Erfindung ist eine Vorrichtung gemäß Anspruch 11 zur Durchführung des erfindungsgemäßen Verfahrens.

Zweckmäßige Ausgestaltungen dieser Vorrichtung sind Gegenstand der Ansprüche 12 bis 18.

Das erfindungsgemäße Verfahren zur Trennung eines Stoffgemisches durch Sorption der Mischungskomponenten an zwei unterschiedliche, in ihren Sorptionseigenschaften unabhängig voneinander einzeln einstellbare Sorptionsmittel und durch Zurücklegen einer Trennstrecke der Sorptionsmittel mit den sorbierten Mischungskomponenten, dadurch gekennzeichnet, daß man das zu trennende Stoffgemisch in den Trennraum (3) zwischen zwei Oberflächen der Sorptionsmittel (1,2) ein- oder auf die Sorptionsmittel aufbringt, wobei die Ein- oder Aufbringung über im wesentlichen den gesamten zur Bewegungsrichtung senkrechten Bereich erfolgt, wobei sich zwischen den einander gegenüberliegenden Oberflächen der Sorptionsmittel (1,2) ein flüssiges oder gasförmiges Zwischenraummedium oder Vakuum befindet, in dem die Mischungskomponenten lösbar und/oder dispergierbar und/oder in das sie verdampfbar sind, und sich die zwei Oberflächen der Sorptionsmittel (1,2) bei im wesentlichen gleichbleibendem Abstand parallel zueinander in entgegengesetzter Richtung bewegen, und man die auf den Sorptionsmitteln befindlichen aufgetrennten Komponenten des Gemisches nach Zurücklegen der Trennstrecke gewinnt.

Zur kontinuierlichen Auf trennung von Substanzen sind zwar auch bereits Verfahren bekannt, die nach dem Gegenstrom-Trennverfahren arbeiten:

Bei der sogenannten Extraktivdestillation wird eine Auftrennung des zu trennenden Gemisches zwischen einem aufwärts strömenden Destillat und einem an der Wandung der Destillationskolonne ablaufenden Flüssigkeitsfilm bestehend aus Trenngut und Extraktionssolvens durchgeführt.

Bei der sogenannten Falling-Film-Extraktion (Destillation) läuft das aufzutrennende Gemisch als Flüssigkeitsfilm an der Innenwandung eines Glasrohres (z.B. eines Destillationsaufsatzes) nach unten und wird durch (mehrfache) selektive Verdampfung in einen aufsteigenden Dampfstrom aufgetrennt.

Bei der sogenannten Gegenstrom-Flüssig/Flüssig-Extraktion befinden sich die aufzutrennenden Stoffe in einem Lösungsmittel, durch das ein schwereres Lösungsmittel von oben hindurch strömt und auf diese Weise eine Teilextraktion des aufzutrennenden Gemisches bewirkt.

Bei allen diesen nach dem Gegenstrom-Trennverfahren arbeitenden bekannten Verfahren besteht die eine mobile Phase aus einer Flüssigkeit, die durch die Schwerkraft bewegt wird (z.B. der an der Wand einer Destillationskolonne ablaufende Flüssigkeitsfilm oder das durch eine Lösung hindurchperlende schwerere Lösungsmittel bei der Gegenstrom-Flüssig/Flüssig-Extraktion), und die zweite mobile Phase ist entweder eine aufsteigende Dampfphase (nach dem Prinzip der Destillation), oder eine statische oder aufsteigende flüssige Phase (bei der Gegenstrom-Flüssig/Flüssig-Extraktion, wobei die Lösungsmittelphase mittels einer Pumpe auch aufsteigend sein kann).

Auch mit diesen Verfahren lassen sich nicht alle Nachteile, wie sie vorstehend im Zusammenhang mit normalen Chromatographie-Verfahren genannt wurden, vermeiden. So sind z.B. nach diesen Verfahren die Eigenschaften der beiden Phasen nur in engen Grenzen frei und selektiv wählbar, die Strömungsgeschwindigkeit, die sich insbesondere aus der Schwerkraft ergibt, ist wenig beeinflußbar, und unterschiedliche Temperaturen zwischen den beiden Phasen sind nicht oder nur schwer zu erzielen.

Im Gegensatz dazu ist es nach dem erfindungsgemäßen Verfahren leicht möglich, bestimmte Eigenschaften, wie z.B. die Art, Geschwindigkeit und Richtung der einzelnen Phasen, ihre Temperatur usw., frei zu wählen und selektiv auf das zu trennende Gemisch einzustellen.

Erfindungsgemäß ist es z.B. möglich, alle zur Trennung verwendeten Phasen in einer frei wählbaren unterschiedlichen Richtung und mit einer frei wählbaren Geschwindigkeit zu bewegen, wobei Richtung und/oder Geschwindigkeit dem gewünschten Ergebnis angepaßt werden können. Im Unterschied zum Stand der Technik können dabei auch Oberflächen der Sorptionsmittel selbst mit einer frei wählbaren Geschwindigkeit und Richtung bewegt werden, und nicht nur, wie z.B. bei der Falling-Film-Extraktion, ein über eine Oberfläche strömender Flüssigkeitsfilm, der außerdem in seiner Geschwindigkeit durch die Schwerkraft festgelegt ist.

In zweckmäßigen Ausgestaltungen des erfindungsgemäßen Verfahrens unterscheiden sich die Sorptionsmittel hinsichtlich ihrer Polarität, geometrischen Anordnung von bindenden Funktionen, Porengröße, Viskosität, Temperatur und/oder elektrischer Ladung. Die Sorptionsmittel (1,2) befinden sich vorzusgweise auf einem Träger (4,5); sie können z.B. auch verschiedene auf einem Träger (4,5) befindliche Flüssigkeitsfilme sein.

In einer Ausführungsform des erfindungsgemäßen Verfahrens sind die Träger (4,5) ebene oder gekrümmte Bänder oder Scheiben, oder Teil einer Zylinder- oder Kugeloberfläche.

In einer anderen bevorzugten Ausführungsform werden die Träger durch die Wände von Vertiefungen gebildet, die sich in parallel zueinander liegenden Oberflächen, insbesondere in zwei sich in gegenläufiger Richtung zueinander drehenden zylinderförmigen Röhren befinden und sich senkrecht zur Laufrichtung, im Falle von zylinderförmigen Röhren parallel zur Zylinderachse erstrecken, wobei die Zylinderröhren (zylindrischen Trommeln) konzentrisch ineinander (mit gemeinsamer Drehachse) oder übereinander (mit gemeinsamer Drehachse und gleicher Grundfläche) angeordnet sind und die Vertiefungen in den sich gegenüberliegenden Flächen der Zylinderrröhren so angebracht sind, daß sie sich bei der gegenläufigen Drehbewegung der beiden Zylinderröhren abwechselnd in einer Position befinden, in der ihre Öffnungen gegenüberliegen, und in einer Position, in der ihre Öffnungen einer Rohrwand gegenüberliegen, in der sich keine Vertiefungen befinden.

Wenn sich die Vertiefungen auf Trägern befinden, die ebene oder gekrümmte Bänder oder Scheiben, oder Teil einer Zylinder- oder Kugeloberfläche darstellen, z.B. im wesentlichen parallel zueinander angeordnete Bänder, bilden, ebenso wie im Falle von Zylinderröhren, vorzugsweise nur die Wände der Vertiefungen den Träger für das Sorptionsmittel.

Die Vertiefungen sind z.B. als Rillen oder Rinnen mit halbkreisförmigem, V-förmigem oder rechteckigem Querschnitt ausgebildet, und besitzen vorzugsweise die Form von Kammern mit rechteckigem Querschnitt, dessen Längsseiten senkrecht auf die sich gegenüberliegenden Oberflächen ausgerichtet sind, wobei die Tiefe der Kammern ein Vielfaches der Öffnungsbreite betragen kann, z.B. das 1- bis 100-fache.

Die Vertiefungen in den beiden sich gegenüberliegenden Oberflächen, und insbesondere Zylinderröhren, sind in erster Linie so ausgebildet, daß sie im wesentlichen Bild und Spiegelbild darstellen. Die Vertiefungen erstrecken sich im wesentlichen über die gesamte Zylinderrohrlänge.

Die Zahl der Vertiefungen, die sich auf sich gegenüberliegenden Oberflächen, insbesondere Zylinderröhren, befinden, kann in einem weiten Bereich variieren, und ist insbesondere abhängig von der Länge der Trennstrecke, bzw. vom Radius der Zylinderröhren. Die Zahl der verwendeten Vertiefungen liegt vorzugsweise im Bereich von 5 bis 10000, insbesondere zwischen 20 und 1000, und in erster Linie zwischen 30 und 100. Der Abstand zwischen zwei nebeneinander liegenden Vertiefungen entspricht mindestens der Breite der Öffnung der Vertiefung, und ist vorzugsweise größer als diese, und beträgt insbesondere das 2- bis 4-fache der Öffnungsbreite.

Um die für eine Trennung zur Verfügung stehende Adsorptionsfläche möglichst groß auszugestalten, können die Vertiefungen zweckmäßigerweise außerdem in Richtung der Vertiefung verlaufende parallele Lamellen enthalten.

Der Radius der zylinderförmigen Röhren kann ebenfalls in weiten Grenzen variieren, und richtet sich insbesondere nach der Menge des zu trennenden Stoffgemisches, d.h. nach seiner Anwendung im Laboratorium, halbtechnischen oder technischen Maßstab. In der Regel liegt der Radius für Apparaturen im Labormaßstab im Bereich von 5 bis 30 cm, für den halbtechnischen Maßstab im Bereich von 50 bis 300 cm. Die Höhe der Zylinderröhren ist ebenfalls insbesondere von der zu trennenden Menge des Stoffgemisches abhängig; sie liegt für den Laboratoriumsmaßstab vorzugsweise im Bereich von 5 bis 100 cm, und für den halbtechnischen Maßstab im Bereich von 50 bis 500 cm.

Die Tiefe der Vertiefungen, z.B. der vorstehend genannten und vorzugsweise verwendeten Kammern, ist ebenfalls in einem weiten Bereich variierbar; die Vertiefungen können sich von ihrer Öffnung bis zur gegenüberliegenden Wand der Zylinderröhre erstrecken, die dann sozusagen die Begrenzungsfläche für die Vertiefung, z.B. die Kammer, bildet. Sie liegt, abhängig von der Größe der verwendeten Vorrichtung, im wesentlichen in einem Bereich von 0.1 mm bis 100 cm, und vorzugsweise im Bereich von 0.1 bis 10 cm. Die oberen Bereichsgrenzen entsprechen dabei im wesentlichen der größten Dicke der Zylinderröhren, wobei die Dicke vorzugsweise im Bereich von 0.1 bis 50 cm, und insbesondere von 1 bis 20 cm liegt.

Die Vertiefungen von sich gegenüberliegenden Oberflächen, insbesondere von konzentrisch angeordneten Zylinderröhren, enthalten vorzugsweise Strömungsumlenkeinrichtungen, die in bestimmten Abständen an den zur Zylinderrohrachse parallelen Flächen der Vertiefungen so angeordnet sind, daß sie die Strömungsrichtung eines parallel zur Zylinderrohrachse strömenden Zwischenraummediums so ändern, daß dieses, wenn sich die Vertiefungen gegenüberstehen, im Laufe des Durchströmens der Vertiefungen abwechselnd von einer Vertiefung in die gegenüberliegende Vertiefung strömt, wodurch in der Regel die Effektivität der Trennung erhöht werden kann. Die Strömungsumlenkeinrichtungen sind vorzugsweise parallel zueinander angeordnete, dem Querschnitt der Vertiefung angepaßte Plättchen oder Platten, die z.B. bei Kammern in Form eines Rechteckes ausgebildet sein können. Vorzugsweise entspricht die Form der Strömungsumlenkeinrichtungen dem gesamten Querschnitt der Vertiefungen.

Die Strömung des Zwischenraummediums durch die Vertiefungen wird dabei vorzugsweise mittels eines geeigneten Umwälzsystems hergestellt, wobei es insbesondere zweckmäßig ist, daß jeder einzelnen Vertiefung mindestens einer oder beider gegenüberliegenden Oberflächen, z.B. der zylinderförmigen Röhren, ein Umwälzsystem zugeordnet ist, z.B. eine Umwälzpumpe.

Auch die in Form von ebenen oder gekrümmten Bändern oder Scheiben, oder als Teil einer Zylinder- oder Kugeloberfläche ausgebildeten Träger, insbesondere wenn sie parallel zueinander liegende Oberflächen aufweisen, wie z.B. parallel zueinander angeordnete Bänder, werden zweckmäßigerweise mit den vorstehend insbesondere für die Zylinderröhren beschriebenen Vertiefungen, in erster Linie Kammern, ausgestattet, wobei gegenüberliegende Oberflächen den gegenüberliegenden Flächen der Zylinderröhren entsprechen. Auch die an derartigen Trägern befindlichen Vertiefungen sind zweckmäßigerweise mit einem Umwälzsystem, z.B. einer Umwälzpumpe, ausgestattet, wobei auch hier vorzugsweise jeder einzelnen Vertiefung mindestens einer oder beider Träger ein Umwälzsystem zugeordnet ist.

Der Abstand der sich in unterschiedlicher Richtung bewegenden Phasen ist in weiten Grenzen variierbar, wodurch sowohl in apparativer Hinsicht als auch im Hinblick auf das Ergebnis Optimierungen möglich sind. Insbesondere lassen sich dadurch auch leicht und in frei wählbarer und selektiver Weise Temperaturdifferenzen zwischen den einzelnen Phasen, sowie Temperaturgradienten innerhalb einer Phase über die Länge der Trennstrecke leicht einstellen, wodurch eine weitere Optimierung des gewünschten Ergebnisses möglich ist. Im Falle von zwei sich in gegenläufiger Richtung zueinander bewegenden Oberflächen mit Vertiefungen, wird der Abstand vorzugsweise so gering wie möglich gewählt, und soll nur die gegenläufige Bewegung zulassen.

Mit dem erfindungsgemäßen Verfahren ist es außerdem auch möglich, die Chromatographie auf kontinuierliche zweidimensionale Weise durchzuführen, d.h. es kann eine flächenhafte Trennung von Substanzgemischen durchgeführt werden. Erfindungsgemäß ist dies dadurch zu erreichen, daß man mindestens zwei der sich in unterschiedlicher Richtung bewegenden Phasen, z.B. zwei parallele Bänder, zueinander in einem Winkel zwischen 90° und 180° bewegt, wobei der Winkel von 180° eine gegenläufige Bewegung (z.B. zwei sich in gegenläufiger Richtung bewegende Bänder) darstellt, und der Winkel von 90° eine zueinander senkrechte Bewegung (z.B. zwei sich senkrecht zueinander bewegende Bänder). Daneben kann auch noch die dritte Phase (Zwischenraummedium) in einer ebenfalls frei wählbaren Richtung zu den beiden anderen Phasen bewegt werden, z.B. in Form eines in einer bestimmten Richtung strömenden Gasstromes, oder mittels eines zwischen den Sorptionsmittelphasen (z.B. Bändern) liegenden bewegbaren Gitters oder einer ähnlichen Einrichtung.

Ein weiterer Vorteil des erfindungsgemäßen Verfahrens besteht auch darin, daß die Phasen nicht, wie bei den üblichen auf der Basis von Gegenstrom-Trennverfahren arbeitenden Verfahren, aus mindestens einer Flüssigkeit bestehen müssen, sondern die Phasen können auch Festphasen sein, wodurch weitere Optimierungen, z.B. auch im Hinblick auf die apparative Durchführung des Verfahrens, möglich sind.

Das erfindungsgemäße Trennsystem stellt im Normalfall ein Dreiphasensystem dar, wobei z.B. Laufrichtung, Geschwindigkeit und/oder Temperatur jeder einzelnen der drei Phasen unabhängig voneinander frei wählbar und/oder regelbar sind, und auf das vorliegende Trennproblem abgestellt werden können.

Wenn die Sorptionsdauer an einer der beiden sich in unterschiedlicher Richtung bewegenden Oberflächen der Sorptionsmittel sehr kurz ist, und sich das Trenngut deshalb im wesentlichen an der Oberfläche des anderen Sorptionsmittels oder im Zwischenraummedium befindet, so dient diese Oberfläche des Sorptionsmittels im wesentlichen nur dazu, das gewünschte Geschwindigkeitsprofil im Zwischenraummedium einzustellen, und wirkt mehr oder weniger als Rückprallwand; in diesem Fall kann das erfindungsgemäße Trennsystem deshalb auch im wesentlichen als Zweiphasensystem angesehen werden.

Durch Wahl von Richtung und Geschwindigkeit der Phasen, aber auch durch Auswahl der übrigen variablen Parameter, läßt sich ein gewünschter Austragort für die aufgetrennten Fraktionen bestimmen. Er ist durch die Vektoren aus Betrag und Richtung der Geschwindigkeit mal der Verweilzeit der Komponenten in bzw. an den drei Phasen, bestehend aus Oberflächen und Zwischenraummedium, bestimmbar; der Auftragort wird dabei zweckmäßigerweise so gelegt, daß die zurücklegbare Trennstrecke möglichst groß ist.

Die Sorptionsmittel der erfindungsgemäßen Phasen können Adsorptionsmittel und/oder Absorptionsmittel darstellen. Sie unterscheiden sich insbesondere hinsichtlich ihrer Polarität, geometrischen Anordnung von bindenden Funktionen (z.B. Chiralität), Porengröße, Temperatur und/oder elektrischer Ladung.

Solche unterschiedliche Parameter sind z.B. im Hinblick auf:
Die Polarität: Sauer, basisch, sauer und basisch, aliphatisch, aromatisch, substituiert (z.B. durch unterschiedliche polare Gruppen, Halogengruppen, OH-Gruppen);
die geometrische Anordnung von bindenden Funktionen: Chirale Flächen, enzymbelegte oder enzymähnliche Flächen, Komplexbildner usw.;
die Porengröße: Verwendung unterschiedlicher Zeolithe, von organischen oder anorganischen Polymeren (z.B. Polystyrol, Polyethylen, Polyamide, Polyharnstoffderivate, Polycarbonsäuren, Polyester, Polyamine, Cellulosederivate) vorzugsweise mit unterschiedlichen Diffusionskoeffizienten;
verschiedene Flüssigkeitsfilme, z.B. Paraffinöle, Siliconöle und andere an sich bekannte, dafür übliche Flüssigkeitsfilme;
Temperatur: Die Temperatur der einzelnen Phasen kann in weiten Grenzen variieren, und in einem Bereich von Gefriertemperaturen bis zu Siedetemperaturen liegen, z.B. im Bereich von -79°C (Temperatur von Trockeneis) bis zu 200°C, und insbesondere im Bereich von -10 bis 100°C, in erster Linie im Bereich zwischen 0 und 50°C, wobei im Hinblick auf eine gute apparative und wirtschaftliche Durchführung insbesondere Umgebungstemperatur bevorzugt wird,
elektrische Ladung: Neben entgegengesetztem Vorzeichen (+ oder -) kann sie auch unterschiedliche Stärke aufweisen.
Sie kann auch gleichzeitig mit anderen Oberflächenbeschichtungen und/oder -Veränderungen angelegt werden, wenn das Trägerband elektrisch leitfähig ist.

Die Sorptionsmittel können z.B. auf einem Träger befindliche Flüssigkeitsfilme sein. Erfindungsgemäß werden als Sorptionsmittel in erster Linie die in der Chromatographie und/oder Elektrophorese üblichen Sorptionsmittel verwendet.

Vorzugsweise befinden sich die Sorptionsmittel auf einem Träger, wie z.B. auf ebenen oder gekrümmten Bändern oder Scheiben, oder auf Teilen von Zylinder- oder Kugeloberflächen und/oder in den vorstehend beschriebenen Vertiefungen; im Falle von zwei sich in gegenläufiger Richtung drehenden Zylinderröhren befindet sich das Sorptionsmittel vorzugsweise nur an den Wänden der Vertiefungen. Diese Träger können dann in unterschiedlicher Richtung, und wenn erwünscht, mit verschiedener Geschwindigkeit bewegt werden.

Das Zwischenraummedium zwischen den Oberflächen der Sorptionsmittel kann eine Flüssigkeit, ein Gas oder auch ein Vakuum darstellen; im Falle eines Vakuums ist dieses nur durch den Dampfdruck des zu trennenden Stoffgemisches begrenzt. Das Zwischenraummedium kann aber auch das zu trennende Stoffgemisch sein, z.B. ein Gemisch aus zwei oder mehreren flüssigen Komponenten. Das Zwischenraummedium kann sich vom Zentrum (Auftragsort) nach einem oder mehreren Austragsorten hin bewegen. Vorzugsweise wird deshalb das zu trennende Stoffgemisch in den mittleren Längenbereich des Trennraums eingebracht, wodurch nach beiden Seiten eine möglichst große Trennstrecke erreicht werden kann.

Der Abstand der sich gegenüberliegenden Oberflächen der Sorptionsmittel, zwischen denen sich das Zwischenraummedium befindet, ist ebenso wie die Anzahl und Art gegebenenfalls vorhandener Vertiefungen, in weiten Grenzen variierbar; er wird dadurch begrenzt, daß die Möglichkeit bestehen muß, daß die Mischungskomponenten über das im Trennraum sich befindende Zwischenraummedium im Austausch zwischen den beiden Oberflächen der Sorptionsmittel stehen. Vorzugsweise ist der Abstand der gegenüberliegenden Oberflächen der Sorptionsmittel justierbar. Der Abstand beträgt insbesondere im Falle von Oberflächen ohne Vertiefungen, vorzugsweise 0.01 µm bis 20000 µm, und insbesondere 0.1 µm bis 2000 µm.

Die Geschwindigkeit der sich in unterschiedlicher Richtung bewegenden Sorptionsmittel bzw. der zwei Sorptionsmittel und des Zwischenraummediums, oder die Umdrehungsgeschwindigkeit der beiden Zylinderröhren, kann gleich oder verschieden sein, und in einem weiten Bereich variieren. Vorzugsweise liegt die Geschwindigkeit im Bereich von 0.1 mm/sec. bis 500 mm/sec, und die Umdrehungsgeschwindigkeit im Bereich von 0.1 UpStunde bis 10 UpM.

Die Temperatur der Sorptionsmittel oder der Oberfläche der Sorptionsmittel kann gleich oder verschieden sein; in bestimmten Fällen kann es zweckmäßig sein, daß die Temperatur der Sorptionsmittel, zumindest ihrer Oberflächen, verschieden ist und/oder ein Temperaturgradient in Richtung der Trennstrecke vorliegt.

Das im Trennraum zwischen den sich in unterschiedlichen Richtungen bewegenden Oberflächen der Sorptionsmittel befindliche Zwischenraummedium kann selbst in Ruhe sein, kann aber in manchen Fällen zweckmäßigerweise auch mit einer bestimmten Geschwindigkeit und Richtung, die ebenfalls frei wählbar sind, zwischen den beiden Oberflächen der Sorptionsmittel strömen.

Das zu trennende Stoffgemisch kann über eine dafür geeignete Vorrichtung in das erfindungsgemäße Trennsystem eingebracht werden. Zweckmäßigerweise kann man dazu ein Roll-on-System oder Brush-on-System verwenden, oder einen Kapillarjet, eine Desorptions/Adsorptionsschleuse, einen feinen Schlauch, eine Fritte, eine Kanüle oder eine Pumpe, oder aber das Trenngut auf eine oder beide Oberflächen der Sorptionsmittel aufdampfen, oder das zu trennende Stoffgemisch wird in das Umwälzsystem einer oder mehrerer Vertiefungen eingespeist. Das Roll-on-System kann z.B. ein benetzender Hohlstift sein, das Brush-on-System z.B. einen benetzenden, starren Hohlstift umfassen.

Der Austrag der Komponenten (Fraktionen) des erfindungsgemäß aufgetrennten Stoffgemisches von den Sorptionsmitteln kann mit einem dafür geeigneten Austragssystem erfolgen. Insbesondere erfolgt die Desorption der Komponenten (Fraktionen) erfindungsgemäß z.B. durch einen Gasstrom, dessen Geschwindigkeit und Temperatur vorzugsweise regelbar ist, z.B. durch Abscheidung in eine Kühlfalle und/oder durch thermische Desorption, z.B. mittels einer auf der Rückseite der beladenen Sorptionsfläche sich befindlichen heißen Rolle; durch IR- oder Mikrowellenbestrahlung, durch Ultraschall, durch Elution, durch Entnahme der Komponenten aus dem zirkulierenden Gasstrom oder Umwälzsystem einer oder mehrerer Vertiefungen, z.B. durch eine Pumpe, wobei auch zwei oder mehrere dieser Desorptionsmöglichkeiten gleichzeitig verwendet werden können. Nach dem Austrag, insbesondere durch einen Gasstrom oder durch thermische Desorption, erfolgt die Abscheidung dann vorzugsweise auf einer kalten Kollektorfläche, z.B. in einer Kühlfalle.

Ist das System mit Vertiefungen und Umwälzanlagen ausgestattet, läßt sich das zu trennende Stoffgemisch als ein bei einer bestimmten, im Normalfall deutlich höheren Temperatur definiert gesättigter Gasstrom (oder auch Lösungsstrom) in das Umwälzsystem der Auftragsvertiefung einspeisen. Entsprechend können die aufgetrennten Stoffe durch "Anzapfen" der Austragsumwälzsysteme (Austragskreisläufe) ausgeführt und gewonnen werden, z.B. durch Abscheiden an einer kalten Kollektoroberfläche.

Für den Verlauf des Verfahrens (Reinheitsbestimmung der aufgetrennten Fraktionen während des Prozeßes) können verschiedene dafür geeignete und für derartige Reinheitsbestimmungen ansich bekannte Detektionsmethoden verwendet werden. Erfindungsgemäß bevorzugte Detektionsmöglichkeiten sind z.B. IR-Absorption (z.B. mittels eines IR-Dioden-Array-Photometers), VIS- oder UV-Absorption (z.B. mittels eines UV-Dioden-Array-Photometers), Brechungsindex (wie z.B. insbesondere im HPLC-Verfahren verwendet), Bestimmung des optischen Drehwertes, Bestimmung der Polarisierbarkeit, der Dielektrizitätskonstante (DK). Solche Detektionsverfahren sind insbesondere von Bedeutung für eine elektronisch geregelte, ständige Trennungsoptimierung, und das erfindungsgemäße kontinuierliche Verfahren wird vorzugsweise so durchgeführt, daß man kontinuierlich durch Variation jeweils einzelner Parameter Änderungen des Trennergebnisses bestimmt und durch Abstimmung aufeinander die gesamten Trennparameter in kontinuierlicher Weise optimiert.

Von den vorstehend genannten Detektionsverfahren können auch zwei oder mehrere gleichzeitig zur Detektion verwendet werden.

Trennparameter, die optimiert werden können, können apparativ festgelegte Parameter oder an das jeweilige vorliegende Trennproblem anpaßbare, in kontinuierlicher Weise optimierbare Parameter sein.

Apparativ festgelegte Parameter, die optimiert werden können, sind z.B.: Die Länge der Trennstrecke, die Breite der Trennstrecke, die Spaltbreite, d.h. der Abstand der Oberflächen der Sorptionsmittel (Spaltbreite), der justierbar konstruiert sein kann, Sorptionseigenschaften der Trennflächen, Winkel zwischen den Laufrichtungen der Oberflächen der Sorptionsmittel (z.B. von mit den Sorptionsmitteln beladenen Bändern, ebenfalls justierbar), Zahl, Form und Dimensionen von Vertiefungen.

An das jeweilige spezifische Trennproblem anpaßbare Parameter sind insbesondere z.B.: Die Temperaturen T1 und T2 der beiden Sorptionsmittel/Oberflächen der Sorptionsmittel, und/oder die Temperaturgradienten von T1 und T2 entlang der Trennstrecke 1, die (Ultra) Schallintensität auf den Trennflächen (durch die die Platzwechselrate der aufzutrennenden Komponenten an den Sorptionsmitteln beeinflußt werden kann), Druck (der in einem weiten Bereich, von Vakuum bis Oberdruck, z.B. superkritischer Druck, variieren kann), Geschwindigkeit der Fläche 1 (V₁) und/oder Geschwindigkeit der Gegenfläche 2, (V₂), oder die Umdrehungsgeschwindigkeiten der sich in gegenläufiger Richtung zueinander drehenden Zylinderröhren, Auftragsmenge und/oder Zeit (z.B. durch Optimierung des Zuflusses an aufzutragendem zu trennendem Stoffgemisch), Strömungsgeschwindigkeit und/oder Strömungsrichtung eines zusätzlichen Trägerstroms zum Austragen nicht wandernder Substanzen, Art und Stärke einer elektrischen Ladung auf den Sorptionsmittelflächen.

Auch hier ist es möglich, zwei oder mehrere der vorstehend genannten Optimierungssparameter zu kombinieren.

Nach dem erfindungsgemäßen Verfahren bewegen sich mindestens zwei der Phasen in unterschiedlicher Richtung, und im Falle parallel angeordneter ebener Oberflächen, z.B. Bändern, vorzugsweise zueinander in einem Winkel zwischen 90° und 180°, d.h., die Bewegungsrichtungen der beiden Phasen bilden einen Winkel zwischen 90° und 180°.

Im Hinblick auf eine apparative Ausgestaltung der Vorrichtung zur Durchführung des Verfahrens sind dabei Winkel von 180°C und 90°C bevorzugt, d.h. also diejenigen Ausführungsformen, in denen sich mindestens zwei der Phasen, z.B. in Form von auf Bändern befindlichen Sorptionsmitteln, gegenläufig (180°C) bewegen, oder senkrecht zueinander (90°C).

Das erfindungsgemäße Verfahren kann ganz allgemein im Vakuum, bei Normaldruck oder erhöhtem Druck, z.B. überkritischem Druck, durchgeführt werden, wobei sich die Auswahl des Druckes insbesondere nach dem vorliegenden Trennproblem richtet.

Nach dem erfindungsgemäßen Verfahren der kontinuierlichen Chromatographie (CC) wird ein aufzutrennendes Gemisch in zwei Fraktionen aufgetrennt, die jeweils noch ein Gemisch von Komponenten enthalten können. Zur weiteren Auftrennung und/oder Reinigung der nach dieser Trennoperation erhaltenen Fraktionen (Komponenten) des Stoffgemisches kann das Verfahren für eine oder mehrere der erhaltenen Fraktionen (Komponenten) beliebig oft wiederholt werden.

Die erfindungsgemäße Vorrichtung zur Durchführung des Verfahrens zur kontinuierlichen Chromatographie eines Stoffgemisches umfaßt zwei unterschiedliche Sorptionsmittel (1,2), und einen Trennraum (3) zwischen zwei Oberflächen der Sorptionsmittel (1,2), in dem sich ein flüssiges oder gasförmiges Zwischenraummedium oder Vakuum befindet, in dem die Mischungskomponenten lösbar und/oder dispergierbar und/oder in das sie verdampfbar sind, wobei die Sorptionsmittel (1,2) so angeordnet sind, daß sich die zwei Oberflächen der Sorptionsmittel (1,2) bei im wesentlichen gleichbleibendem Abstand parallel zueinander in entgegengesetzter Richtung bewegen, sowie eine Auftragseinrichtung (10) zur Zuführung des zu trennenden Stoffgemisches in den Trennraum (3) oder auf die Sorptionsmittel (1,2) über im wesentlichen den gesamten zur Bewegungsrichtung senkrechten Bereich, und eine Austrageinrichtung zur Gewinnung der aufgetrennten Fraktionen des Gemisches nach einer bestimmten zurückgelegten Trennstrecke durch Desorption oder Elution.

Zweckmäßige Ausgestaltungen der erfindungsgemäßen Vorrichtung sind bereits vorstehend im Zusammenhang mit der Verfahrensdurchführung beschrieben.

Die Temperatur der Sorptionsmittel (1,2) kann verschieden sein und/oder ein Temperaturgradient in jedem der Sorptionsmittel (1,2) entlang der Trennstrecke (1) vorhanden sein.

Auch das sich im Trennraum (3) befindliche Zwischenraummedium kann zweckmäßigerweise mit einer bestimmten Geschwindigkeit und Richtung, die freiwählbar sind, zwischen den beiden Oberflächen der Sorptionsmittel (1,2) strömen.

Zur Einbringung des zu trennenden Stoffgemisches ist die erfindungsgemäße Vorrichtung mit einer geeigneten Auftrageinrichtung (Auftragssystem (10)) versehen. Vorzugsweise ist das Auftragssystem ein Roll-on-System (z.B. in Form eines benetzenden Hohlstiftes (10)), oder ein Brush-on-System (z.B. in Form eines benetzenden, starren Hohlstiftes (10)), oder ein Kapillarjet, ein dünner (Kapillar) Schlauch, eine Fritte, eine Kanüle, eine Vorrichtung zur Einspeisung eines definiert gesättigten Gasstroms, insbesondere zur Einspeisung in das Umwälzsystem einer oder mehrerer Vertiefungen, oder eine Desorptions/Adsorptionsschleuse. Das Trenngut kann aber auch auf eine oder beide Oberflächen des Sorptionsmittels (1,2) mit einer geeigneten Aufdampfvorrichtung aufgedampft werden.

Die erfindungsgemäße Vorrichtung umfaßt außerdem geeignete Austragseinrichtungen zur Entnahme der aufgetrennten Fraktionen (Komponenten) des Gemisches nach einer bestimmten zurückgelegten Trennstrecke (Strecke zwischen Auftragungsort und Desorptionsort, 1). Vorzugsweise sind die Austragseinrichtungen solche auf der Basis eines in der Geschwindigkeit und/oder der Temperatur regelbaren Gasstromes, z.B. dargestellt durch den Gasstrom eines Umwälzsystems einer oder mehrerer Vertiefungen, und/oder Einrichtungen zur thermischen Desorption, z.B. mittels einer auf der Rückseite der beladenen Sorptionsfläche befindlichen heißen Rolle, oder mittels Einrichtungen zur Mikrowellenbestrahlung oder IR-Bestrahlung, und/oder Einrichtungen zur Ultrabeschallung, oder zur Elution, und/oder eine Pumpe. Bei einer Austragung durch einen Gasstrom oder durch thermische Desorption wird damit vorzugsweise eine Abscheidevorrichtung auf der Basis einer kalten Kollektorfläche, z.B. Kühlfalle, vorgesehen.

Bei mit Vertiefungen versehenen Oberflächen, insbesondere im Falle von Zylinderröhren, verwendet man als Auf- und Austrageinrichtung zweckmäßigerweise eine geeignete Pumpe.

Zweckmäßigerweise enthält die erfindungsgemäße Vorrichtung auch Einrichtungen zur Detektion der aufgetrennten Fraktionen (Komponenten), was insbesondere für eine elektronisch geregelte, ständige Trennungsoptimierung von Bedeutung ist.

Solche Detektionseinrichtungen, die sich an einer oder mehreren Stellen der Trennstrecke oder Trennfläche in geeigneter Distanz und Anordnung zu den Sorptionsmitteln befinden, oder auch einer Desorptionseinrichtung nachgeschaltet sein können, sind insbesondere solche Einrichtungen, die die IR-Absorption der Fraktion messen, z.B. ein IR-Dioden-Array-Photometer, oder die VIS- oder UV-Absorption (z.B. ein UV-Dioden-Array-Photometer, oder den Brechungsindex, den optischen Drehwert, die Polarisierbarkeit, oder die Dielektrizitätskonstante (DK).

Die erfindungsgemäße Vorrichtung kann auch mit zwei oder mehreren der vorstehend genannten Desorptions- und/oder Detektionseinrichtungen versehen sein. Vorzugsweise ist die Vorrichtung auch so ausgestaltet, daß sie, abhängig von dem zu trennenden Stoffgemisch, im Vakuum, bei Normaldruck oder erhöhtem Druck, z.B. überkritischem Druck von Mischungskomponenten, betrieben werden kann, sowie in einem weiten Temperaturbereich, insbesondere in den vorstehend im Zusammenhang mit der Verfahrensdurchführung genannten bevorzugten Bereichen. Weitere zweckmäßige Ausführungsformen der erfindungsgemäßen Vorrichtung sind ebenfalls bereits vorstehend im Zusammenhang mit der Verfahrensdurchführung beschrieben.

Im Falle von im wesentlichen parallel angeordneten ebenen Oberflächen der Sorptionsmittel bildet in einer zweckmäßigen Ausführungsform der erfindungsgemäßen Vorrichtung die Bewegungsrichtung von mindestens zwei der drei verschiedenen Phasen (Sorptionsmittel 1,2; Zwischenraummedium im Trennraum 3) zueinander einen Winkel zwischen 90° und 180°. Besonders zweckmäßig ist dabei ein Winkel von 180°C, und ein solcher von 90°C; in diesen Fällen bewegen sich die Phasen, z.B. die auf Bändern aufgebrachten beiden Sorptionsmittel (1,2) gegenläufig (180°C) oder senkrecht zueinander (90°).

Nachfolgend werden zweckmäßige Ausgestaltungen der Erfindung unter Bezugnahme auf die Zeichnung beispielhaft beschrieben, ohne die Erfindung darauf zu beschränken.

In der Zeichnung bedeuten:
- Fig. 1:: Eine schematische Darstellung einer erfindungsgemäßen Vorrichtung im Querschnitt,
- Fig. 2:: eine schematische Darstellung einer Auftragseinrichtung in Form einer Desorptions/Adsorptionsschleuse im Querschnitt,
- Fig. 3:: eine schematische perspektivische Darstellung einer erfindungsgemäßen Vorrichtung,
- Fig. 4:: eine schematische Darstellung der Vorrichtung nach Fig. 3 im Querschnitt,
- Fig. 5:: eine schematische Darstellung einer weiteren Ausführungsform einer erfindungsgemäßen Vorrichtung im Querschnitt,
- Fig. 6:: eine schematische perspektivische Darstellung einer weiteren Ausführungsform einer erfindungsgemäßen Vorrichtung, und
- Fig. 7:: ein unter Verwendung der Vorrichtung nach Fig. 6 erhaltenes Auftrennmuster.
- Fig. 8:: die Draufsicht auf eine erfindungsgemäße Vorrichtung, die zwei sich in gegenläufiger Richtung zueinander drehende konzentrische zylinderförmige Röhren mit als Kammern ausgebildeten Vertiefungen umfaßt.
- Fig. 9:: eine schematische perspektivische Darstellung einer weiteren Ausführungsform einer erfindungsgemäßen Vorrichtung, die zwei mit Kammern versehene übereinander angeordnete Zylinderröhren umfaßt.
- Fig. 10:: einen Schnitt durch zwei sich gegenüberstehende, als Kammern ausgebildete Vertiefungen zweier konzentrisch angeordneter Zylinderröhren in einer Radialebene.
- Fig. 11:: eine Querschnittsform der Vertiefungen.
- Fig. 12:: eine schematische perspektivische Darstellung einer erfindungsgemaßen Vorrichtung, die zwei konzentrische, mit Kammern versehene Zylinderröhren umfaßt, sowie Umwälzeinrichtungen für die Kammern, und Auftrag- und Austrageinrichtungen.

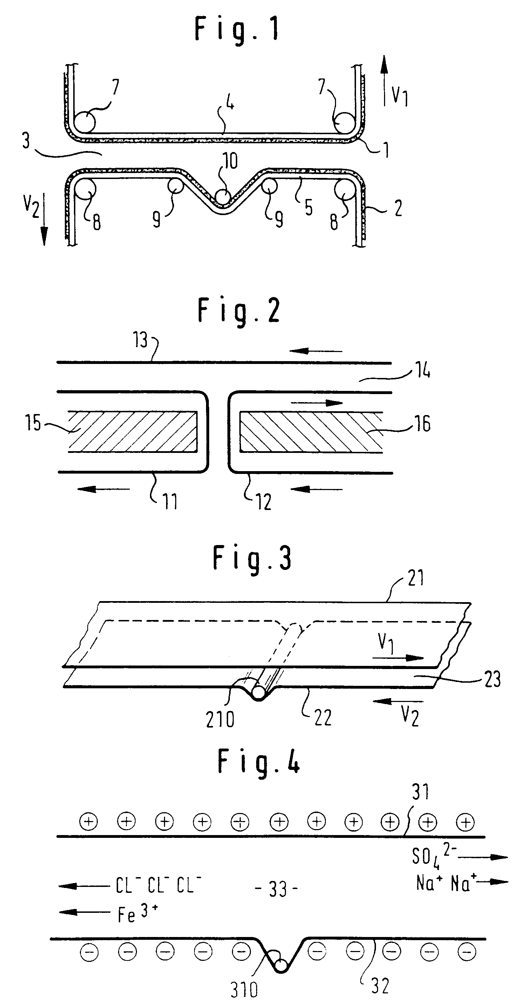

Fig. 1 zeigt die schematische Darstellung einer erfindungsgemäßen Vorrichtung in Querschnitt. Die Sorptionsmittel 1 und 2 befinden sich auf bandförmigen Trägern 4 und 5, die aus Kunststoff oder Metallen aufgebaut sind. Die Bänder 4 und 5, und damit die Sorptionsmittel 1 und 2, bewegen sich über Führungsrollen 7 bzw. 8 in entgegengesetzter Richtung, d.h. ihre Bewegungsrichtungen bilden einen Winkel von 180°. Das Band 5 mit dem Sorptionsmittel 2 läuft außerdem noch über die Umlenkrollen 9 über ein Roll-on-System oder Brush-on-System 10 zum Auftragen des zu trennenden Substanzgemisches. Zwischen den Oberflächen der Sorptionsmittel 1 und 2 befindet sich der Trennraum 3, in dem sich das Zwischenraummedium befindet. Die Bänder 4 und 5 bewegen sich mit den Geschwindigkeiten V₁ und V₂.

Fig. 2 ist eine schematische Darstellung einer erfindungsgemäßen Auftragseinrichtung in Form einer Desorptions/Adsorptionsschleuse. Die beiden Bänder 11 und 12 befinden sich im Bereich der Heizeinrichtungen 15,16, auf 2 verschiedenen Temperaturen T₁ (Band 11) und T₂ (Band 12), wobei T₁ > T₂ ist. Auf dem Band 11 befindet sich eine Probe, die aufgrund der unterschiedlichen Temperaturen der beiden Bänder durch Desorption vom Band 11 desorbiert und vom Band 12 adsorbiert wird. Die Umlenkrollen für die beiden Bänder 11 und 12 sind nicht eingezeichnet. Band 13 bildet eine der beiden sich in unterschiedlicher Richtung bewegenden Phasen aus, z.B. ein mit einem Sorptionsmittel beschichtetes Band als Träger, und die ebenfalls mit einem Sorptionsmittel beschichteten Bänder 11 und 12 die andere der beiden Phasen. Der Auftrag der zu trennenden Mischung erfolgt an der frei zugänglichen Außenseite von Band 12. Zwischen den Bändern 11 und 12 und Band 13 befindet sich der Trennraum 14 mit dem Zwischenraummedium.

Fig. 3 zeigt eine erfindungsgemäße Vorrichtung in schematischer perspektivischer Darstellung. Die Bänder 21 und 22, die sich in entgegengesetzter Richtung zueinander bewegen, bilden die beiden Phasen mit unterschiedlicher Bewegungsrichtung. Sie stellen z.B. Kunststoff- oder Metallbänder dar, die mit einem Sorptionsmittel beschichtet sind, wobei die Oberflächen der Sorptionsmittelbeschichtungen gegenüber liegen. Im Trennraum 23 befindet sich das Zwischenraummedium. Über die Auftragseinrichtung 210, die ein benetzender Hohlstift ist, erfolgt der Zufluß des zu trennenden Stoffgemisches. Die beiden Bänder 21 und 22 bewegen sich mit den Geschwindigkeiten V1 und V2, die unterschiedlich sein können. Band 21 kann aber auch als feststehende, d.h. sich nicht bewegende Wand ausgebildet sein, in diesem Fall erfolgt dann z.B. eine Bewegung des Zwischenraummediums in entgegengesetzter Richtung. Die Umlenkrollen und Transportrollen sind nicht eingezeichnet. Der Austrag erfolgt nach einer bestimmten Trennstrecke (Entfernung Auftragungsort-Austragungsort) in beiden Bandrichtungen.

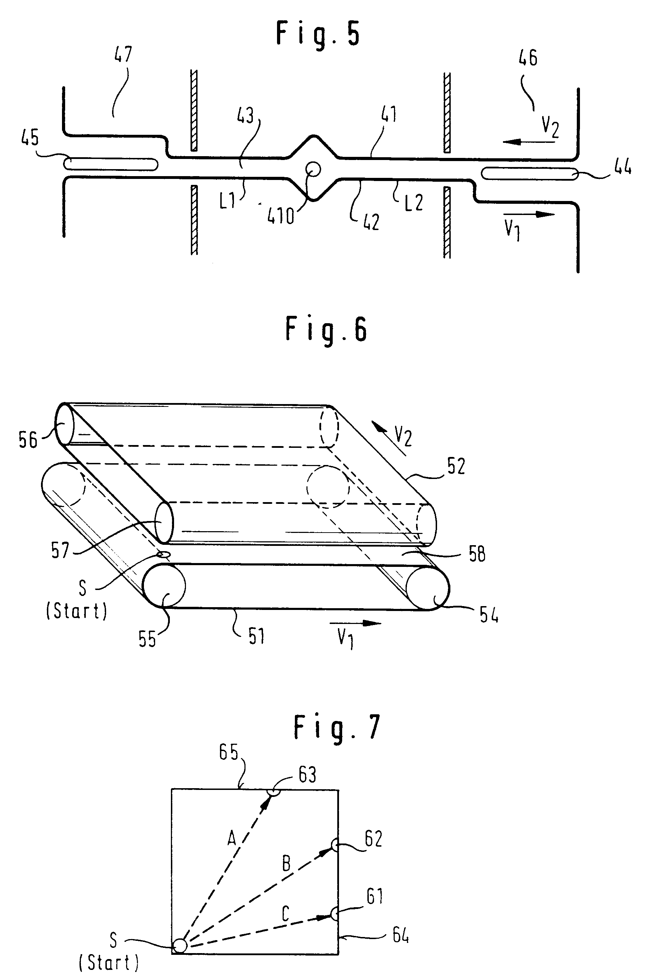

Die Fig. 4 zeigt eine schematische Darstellung einer erfindungsgemäßen Vorrichtung gemäß Fig. 3 im Querschnitt. Die Bänder 31 und 32 bilden die sich in unterschiedlicher Richtung bewegenden beiden Phasen; sie sind so ausgestaltet, daß sie als Ladungsträger für entgegengesetzte, regelbare Ladungen dienen können (also z.B. mit geeigneten Ladungszuführungen, in Kontakt stehende Metallbänder), was durch die eingezeichneten + und - -Ladungen veranschaulicht wird. Im Trennraum 33 befindet sich eine über die Auftragseinrichtung 310 (z.B. ein poröser Hohlstift) zufließende Lösung unterschiedlicher Ionen (was durch die eingetragenen Ionenarten veranschaulicht werden soll).

Die Fig. 5 stellt eine schematische Darstellung einer erfindungsgemäßen Vorrichtung im Querschnitt dar. Die Bänder 41 und 42 bilden die beiden sich in unterschiedlicher Richtung bewegenden Phasen aus, und sind z.B. mit Sorptionsmitteln beschichtete Kunststoff- oder Metallbänder. Durch die Auftragseinrichtung 410, z.B. in Form eines Kapillarjets, wird das aufzutrennende Stoffgemisch in das System eingebracht. Am Ende der Trennstrecke 1, die sich aus den beiden in entgegengesetzer Richtung gerichteten Teiltrennstrecken 11 und 12 zusammensetzt, befinden sich die beiden Kondensatoren 44 und 45 zur Austragung aufgetrennter Fraktionen (Komponenten). An diesen gekühlten Kondensatoren (z.B. Fritte-Kanal-Kühler) werden die Fraktionen abgeschieden. Zwischen den Bändern 41 und 42 befindet sich der Trennraum 43 mit dem Zwischenraummedium. Die zur Bandführung erforderlichen Transport- und Umlenkrollen sind nicht dargestellt.

Die Fig. 6 zeigt in schematischer perspektivischer Darstellung eine erfindungsgemäße Vorrichtung zur zweidimensionalen Auftrennung. Die Bänder 51 und 52 bilden in Form eines Walzenschraders die beiden in unterschiedlicher Richtung sich bewegenden Phasen des erfindungsgemaßen Trennsystems, und sind z.B. mit Sorptionsmittel beschichtete Kunstoff- oder Metallbänder. Sie laufen über die Transportrollen 54 und 55 bzw. 56 und 57, und ihre Bewegungsrichtungen bilden einen Winkel von 90°, d.h. die beiden Bänder 51 und 52 bewegen sich senkrecht zueinander. Zwischen ihnen befindet sich der Trennraum 58, in dem sich das Zwischenraummedium befindet. Die Auftragung des zu trennenden Stoffgemisches erfolgt an der Stelle S (Start). Die beiden Bänder 51 und 52 bilden in Draufsicht einen quadratischen und kongruenten Grundriß.

Fig. 7 zeigt ein für drei Fraktionen A, B und C mit einer Vorrichtung gemäß Fig. 6 erhaltenes Trennmuster. Die Austragungsorte 61, 62 und 63 für die Fraktionen A, B und C werden bestimmt durch die Vektoren aus der Geschwindigkeit, mit der sich die Bänder 51 und 52 bewegen, und den Verweilzeiten der Komponenten in den drei Phasen (die von den Bändern 51 und 52 ausgebildeten beiden Phasen und die Phase des Zwischenraummediums im Trennraum 58). Für die mit einer Vorrichtung gemäß Fig. 6 durchgeführte zweidimensionale Trennung kann es zweckmäßig sein, daß die Bandgeschwindigkeiten der Bänder 51 und 52 gleich sind. Die Austragung der Fraktionen A, B und C kann an den Austragungsorten 61, 62 und 63 entlang der Kanten 64 und 65 erfolgen.

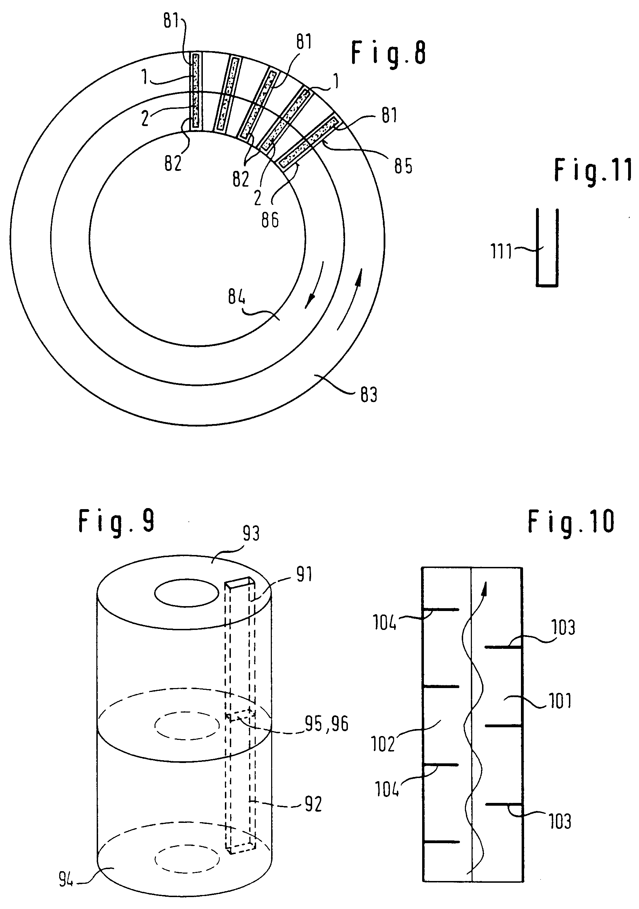

Die Fig. 8 zeigt in Draufsicht eine erfindungsgemäße Vorrichtung, die zwei konzentrisch zueinander angeordnete Zylinderröhren 83 und 84 umfaßt, die mit Kammern 81, 82 versehen sind, die gleichmäßig über den gesamten Umfang der Zylinderröhren angeordnet sind (von denen aber nur ein Teil eingezeichnet ist); die als Kammern ausgebildeten Vertiefungen 81, 82 enthalten die Sorptionsmittelschichten 1 und 2; die Pfeile deuten die unterschiedliche Drehrichtung an.

Die Fig. 9 zeigt schematisch in perspektivischer Darstellung eine erfindungsgemäße Ausführungsform, die zwei übereinander angeordnete Zylinder 93 und 94 umfaßt, die über ihren gesamten Umfang Kammern 91, 92 enthalten (zur klareren Darstellung ist nur je eine Kammer 91,92 eingezeichnet), und die in der dargestellten Position mit ihren Öffnungen 95, 96 in Verbindung stehen.

Die Fig. 10 zeigt zwei sich gegenüberliegende als Kammern 101, 102 ausgebildete Vertiefungen von konzentrisch ineinander angeordneten Zylinderröhren im Schnitt einer Radialebene; die Kammern 101 und 102 sind mit Umlenkeinrichtungen 103, 104 in Form von parallel angeordneten Platten ausgestattet; der Pfeil zeigt schematisch die Änderung der Strömungsrichtung des Zwischenraummediums an.

Die Fig. 11 zeigt eine als Kammer 111 ausgestaltete Vertiefung.

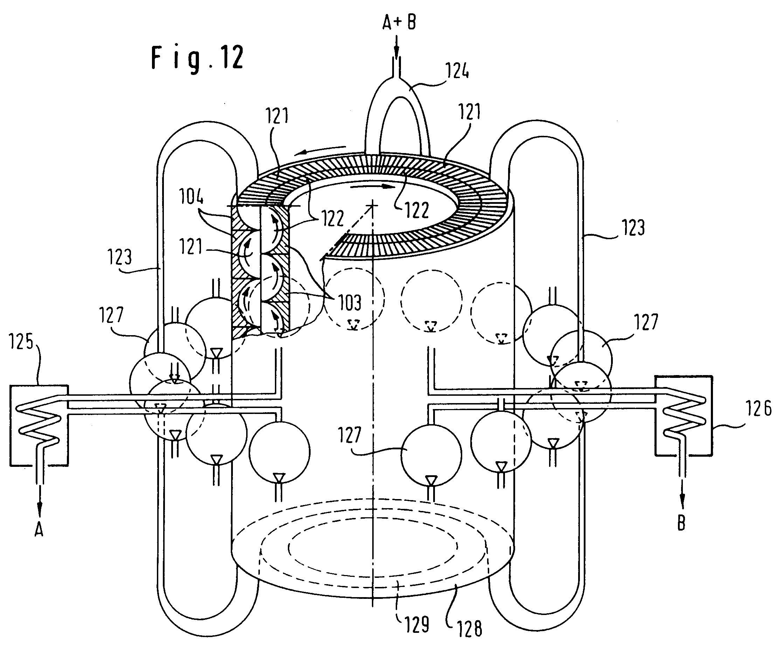

Die Fig. 12 zeigt eine schematische perspektivische Darstellung einer erfindungsgemäßen Ausführungsform, die zwei konzentrisch ineinander angeordnete Zylinderröhren 128,129 mit den Kammern 121,122 umfaßt; die Fig. 12 zeigt außerdem in schematischer Darstellung ein Auftragsystem 124 für den Auftrag der zu trennenden Mischung A + B, sowie die Austragsysteme 125 und 126 zur Ausführung der Komponenten A und B; außerdem ist für zwei Kammern 121,122 schematisch ein Umwälzsystem 123, das diesen Kammern zugeordnet ist, dargestellt, das mit einer Umwälzeinrichtung (Umwälzpumpe) 127 ausgestattet ist; für weitere Kammern sind nur die den zugehörigen Umwälzsystemen zugeordneten Umwälzeinrichtungen (Umwälzpumpen) (127) dargestellt.

Der aufgeschnittene Teil zeigt einen teilweisen Schnitt durch die Kammern 121,122, die mit Strömungsumlenkeinrichtungen 103, 104 ausgestattet sind; die Pfeile deuten die Strömung des Zwischenraummediums durch die Kammern 121,122 an.

### BEISPIELE

### Beispiel 1

a. Unter Verwendung einer Vorrichtung gemäß Fig. 1 oder 3 wird ein aufzutrennendes Stoffgemisch kontinuierlich über die Eintragvorrichtung 10, 210 zwischen die beiden mit den Geschwindigkeiten V1 und V2 sich gegenläufig bewegenden mit Sorptionsmittel 1,2 beschichteten Bänder 4,5; 21,22 in den Trennraum 3, 23 eingebracht. Der Abstand d zwischen den beiden gegenüberliegenden Oberflächen der Sorptionsmittel beträgt < 10 mm. Die Startlinie S befindet sich ca. in der Mitte der Trennstrecke 1, sodaß eine Substanz etwa gleiche Wege bis zum einen oder anderen Ende des Trennsystems zurückzulegen hat. Der Zwischenraum zwischen den beiden Oberflächen der Sorptionsmittel (der Trennraum 3, 23) kann vollständig mit einem aufzutrennenden Flüssigkeitsgemisch gefüllt sein, oder es sind nur die Wände des Trennraums belegt, und im Trennraum herrscht ein Gasdruck p.
   Wenn das Stoffgemisch aus mehreren unterschiedlichen Substanzen besteht, die vorzugsweise an der einen oder anderen Oberfläche der Sorptionsmittel adsorbieren und zusätzlich ein schnell erfolgender Platzwechsel der Moleküle die rasche Einstellung des thermodynamischen Gleichgewichtes gewährleistet, so wandern unterschiedliche Substanzen bevorzugt entweder in die eine oder andere Richtung. Die Trennschärfe bzw. Trennleistung wird dabei festgelegt durch den Energieunterschied der Sorptionsmöglichkeiten, die Temperatur des Systems, die Plaltzwechselraten, die Bandgeschwindigkeiten und die zurückgelegte Diffusions- oder Konvektionsstrecke während der Verweilzeit im Zwischenraummedium. Das Trennsystem läßt sich also insbesondere durch die Wahl der Sorptionsmaterialien und die Parameter T₁, T₂, V₁, V₂, d, l, p und der Auftragmenge (Zufluß) des Stoffgemisches regeln.
   Durch ein zusätzliches Beschicken des Trennraums 3, 23 mit Trägergas oder Trägerflüssigkeit in Bandrichtung oder quer dazu können nicht oder zu langsam wandernde Komponenten eines Stoffgemisches beidseitig ohne Vorzugsrichtung oder quer dazu ausgetragen werden.
b. Multikomponenten Trennung
   Wird die vorstehend verwendete gegenläufige Laufrichtung der Bänder (Winkel der Bewegungsrichtungen 180°) in einen von 180° verschiedenen Winkel geändert, z.B. unter Verwendung der Vorrichtung gemäß Fig. 6 bei einem Winkel von 90°, so können mehrere einzelne Fraktionen entlang der Kanten 64 und 65 des in Fig. 7 dargestellten Trennmusters ausgetragen werden. Das zu trennende Stoffgemisch wird in diesem Fall punktförmig an der Stelle S (Start) aufgetragen. Auf diese Weise lassen sich Multikomponentengemische im kontinuierlichen Betrieb in Einzelkomponenten auftrennen.

### Beispiel 2

a. Trennung eines Farbstoffgemisches aus Farbstoffen verschiedener Polarität.
   Unter Verwendung einer Vorrichtung gemäß Fig. 3 wird das gasförmige, flüssige und/oder feste zu trennende Stoffgemisch zwischen die beiden Bänder 21 und 22 in den Trennraum 23 über eine Eintragvorrichtung 210 eingebracht (z.B. als Lösung und nachfolgendem Abdampfen des Lösungsmittels, durch Aufdampfen, usw.). Es werden Kunstoff- oder Metallbänder verwendet, die mit in der Chromatographie üblichen Sorptionsmittel beschichtet sind. Die Oberfläche der Sorptionsmittel weist eine unterschiedliche Oberflächenpolarität auf. Durch Variation der Bandgeschwindigkeiten, Temperaturen der Sorptionsmittel usw. lassen sich die jeweiligen Trennungen optimieren.
b. Trennung unterschiedlich polarer, nichtionischer Stoffe
   Es wird wie vorstehend unter a beschrieben gearbeitet, mit dem Unterschied, daß die Polarität bzw. der Polaritätsunterschied zwischen den Sorptionsmitteln durch an die Bänder 21 und 22, die aus Metall bestehen, angelegte und getrennt regelbare elektrische Spannungen eingestellt wird. Die Metallbandoberflächen können auch mit inerten Materialien, wie Graphit, Teflon, Polyethylen, Polyamid, Metalloxid usw., beschichtet sein.
   Eine Trennung der vorstehend unter a und b eingesetzten Stoffgemische läßt sich auf vorteilhafte und effektive Weise auch unter Verwendung einer Vorrichtung gemäß Fig. 12 erreichen, in denen die Kammerwände mit Sorptionsmitteln unterschiedlicher Oberflächenpolarität beschichtet sind (analog a) oder die Polarität bzw. der Polaritätsunterschied zwischen den Sorptionsmitteln durch an die Kammerwände der beiden Zylinderröhren angelegte und getrennt regelbare elektrische Spannungen eingestellt wird (analog b).
c. Trennung mehrfach geladener Ionen von einfach geladenen Ionen
   Es wird eine Vorrichtung gemäß Fig. 3 und 4 verwendet. In das Trennsystem wird über die Auftragseinrichtung 210, 310 in den Trennraum 23, 33 eine wässerige Lösung einfach und mehrfach gleichsinnig geladener Ionen eingebracht. Eine regelbare Ladung auf den Bändern 21, 22 und 31, 32 verursacht eine von ihrer Ladungszahl abhängige unterschiedlich starke Adsorption der verschiedenen Ionen an die Wände. Die einfach geladenen Ionen wandern dabei entgegen der Bandrichtung (mit entgegengesetzter Ladung) und bewirken dadurch eine weitgehende Elektroneutralität der getrennten Fraktionen. Da das System gasfrei arbeitet, wird der Flüssigkeitsstrom direkt durch den eingespeisten Fluß geregelt. Die Reinheit kann z.B. über den optischen Drehwert oder die Dielektrizitätskonstante DK der einzelnen Fraktionen ermittelt werden.

Zur Regelung und Optimierung des Trennverfahrens können die folgenden Parameter eingestellt bzw. verändert werden:
1. pH-Wert des Trenngemisches
2. Ionenstärke des Trenngemisches
3. Temperaturen T₁ und T₂
4. Die Spannung U1 und U2 an den Bändern 21, 31 und 22, 32 (Regelung des elektrischen Feldes)
5. Wandabstand (Regelung des elektrischen Feldes und/oder der Turbulenz)
6. Bandgeschwindigkeit (Regelung der Trennschärfe, Turbulenz).

Als zu trennendes Stoffgemisch kann verwendet werden:
a. mehrfach gleichsinning geladene anionische und kationische Farbstoffe in Wasser
b. Fe³⁺, Na⁺, Cl⁻, So₄²⁻ --> FeCl₃ und Na₂So₄
d. Trennung von Salzlösungen in Anionen und Kationen ("geladene Flüssigkeiten")
Es wird eine Vorrichtung gemäß den Fig. 3 und 4 verwendet. An die Bänder 21, 31 und 22, 32 wird eine Spannung angelegt, die wenig kleiner als die Hydrolysespannung ist. In den Trennraum 23, 33 wird kontinuierlich eine verdünnte oder konzentrierte wässerige KCL-Lösung eingespeist. Mit dem positiv geladenen Band wird ein Überschuß an Anionen, und mit dem negativ geladenen Band ein Überschuß an Kationen transportiert. Die Ladungsdichte der so erhaltenen "ionisch geladenen Flüssigkeiten" läßt sich durch weitgehendes Eindampfen des Wassers vervielfachen.

### Beispiel 3

### Destillations-CC oder Sublimations-CC

Es wird mit einer Vorrichtung gemäß Fig. 5 gearbeitet.

Das zu trennende feste oder flüssige Stoffgemisch wird über die Eintrags-Einrichtung 410 in das System eingebracht. Nur die sich gegenüber liegenden Oberflächen der Bänder 41 und 42 sind mit dem festen oder flüssigen Trenngut belegt, und im Trennraum 43 herrscht der Gasdruck p. Die beiden gegenläufig sich bewegenden Oberflächen besitzen verschiedene Temperaturen T₁ und T₂. Die wärmere Fläche bewegt sich gleichzeitig auch mit der höheren Geschwindigkeit. Dadurch bewegt sich die Gasphase im Mittel in Richtung dieser Fläche, und leichter verdampfende Substanzen wandern deshalb in diese Richtung, während schwerer flüchtige (gelöste, flüssige oder feste Substanzen) in die entgegengesetzte Richtung wandern.

Das Substanzgemisch wird nun durch entsprechend geregelte Temperatur- und Geschwindigkeitunterschiede beider Wände in eine höher und eine tiefer siedende Fraktion aufgetrennt. Durch erhöhte Temperatur an den Enden der Trennstrecke werden die Fraktionen quantitativ an gekühlten Kondensatoren 44, 45 abgeschieden. Das Kondensat kann dann durch ein leichtes Vakuum ausgetragen werden.

Zur Regelung und Optimierung des Trennverfahrens können die folgenden Parameter eingestellt bzw. verändert werden:
1. Auftragsmenge/Zeit (Regelung des Stoffgemischzuflusses) [ml/min]
2. Temperaturen T₁, T₂ [°C]; gegebenenfalls auch der Temperaturgradient über die Trennstrecke 1
3. Gasdruck im Trennraum p [Torr], [kN/m²]
4. Wandabstand [mm]
5. Bandgeschwindigkeiten V1 und V2 [cm/sec]
6. Teilrennstrecken 11, 12 [cm]
7. Bandbreite b [cm]
8. Desorptionstemperaturen T3, T4, T5 [°C] in den Temperaturbereichen 46 und 47 und in den Kühlern 44, 45
9. Austragsdrücke p1, p2 [Torr], [kN/m²]
Als aufzutrennendes Stoffgemisch wurde ein Gemisch aus Ethylenglycol (Siedepunkt 198°C, DK = 37.7 (25°C)) und Propylenglycol (Siedepunkt = 188°C, DK = 32.0 (20°C)) im Verhältnis 50:50 verwendet.

Zur Durchführung des Trennverfahrens können die vorstehend genannten Parameter wie folgt eingestellt werden:
1. 1,
2. T1 = 50, T2 = 60,
3. p = 15 oder 760, (2 oder 101 kN/m²)
4. < 5,
5. V1 = 1, V2 = 10,
6. l 1 = l 2 = 50,
7. b = 30,
8. T3, T4 = 100, T5 = 20,
9. p1, p2 = 750. (100 kN/m²)

### Beispiel 4

### CC-Enantiomerentrennung

Es wird eine Vorrichtung gemäß Fig. 12 verwendet. Die sich gegenüber liegenden Oberflächen der Zylinderröhren (128) und (129) besitzen eine unterschiedliche Chiralität, aber gleiche Temperatur. Die Trennung erfolgt durch selektive Adsorption der Enantiomeren an die Oberflächen unterschiedlicher Chiralität. Das Enantiomerengemisch wird mittels der Auftragseinrichtung (124) in das Trennsystem eingebracht.

Zur Regelung und Optimierung des Trennverfahrens können die folgenden Parameter eingestellt oder verändert werden:
1. Belegungsgrad der chiralen Oberflächen,
2. Temperatur des Systems,
3. Umwälzgeschwindigkeit,
4. Umdrehungsgescnwindigkeiten der Zylinder 128, 129.
Als zu trennendes Stoffgemisch kann z.B. D, L-Milchsäure eingesetzt werden.

Auf analoge Weise wie im Beispiel 4 beschrieben, läßt sich unter Verwendung einer Vorrichtung gemäß Fig. 12 und den entsprechenden Sorptionsmitteln auch das im Beispiel 3 eingesetzte Stoffgemisch auftrennen.

### Beispiel 5

### Multikomponententrennung (zweidimensionale CC)

### Es wird eine Vorrichtung gemäß Fig. 6 verwendet.

Ein Mehrkomponentengemisch wird auf einer kleinen Fläche (weitgehend punktförmig) kontinuierlich am Auftragungsort S (Start) aufgebracht. Die aufgetrennten Fraktionen lassen sich, abhängig von ihren Verweilzeiten auf den Oberflächen der Bänder 51 und 52, und den Geschwindigkeiten der Bänder 51 und 52, an den entlang der Kanten 64 und 65 (vgl. Fig. 7) liegenden Austragsorten abnehmen.

Zur Regelung und Optimierung des Trennverfahrens können die folgenden Parameter eingestellt oder verändert werden:
1. Winkel zwischen den Bewegungsrichtungen der Bänder 51 und 52,
2. relative und absolute Bandgeschwindigkeiten V1, V2 (Auswirkung auf Austragsort, Trennschärfe, Trennleistung),
3. sowie weitere in den vorstehenden Beispielen genannte Parameter zur Regelung und Optimierung des Trennverfahrens.

## Patentansprüche

1. Verfahren zur Trennung eines Stoffgemisches durch Sorption der Mischungskomponenten an unterschiedliche, in ihren Sorptionseigenschaften unabhängig voneinander einzeln einstellbare Sorptionsmittel und durch Zurücklegen einer Trennstrecke der Sorptionsmittel mit den sorbierten Mischungskomponenten, wobei das zu trennende Stoffgemisch in den Trennraum (3) zwischen zwei Oberflächen der Sorptionsmittel (1,2) ein- oder auf die Sorptionsmittel aufbringt, wobei die Ein- oder Aufbringung über im wesentlichen den gesamten zur Bewegungsrichtung senkrechten Bereich erfolgt, wobei sich zwischen den einander gegenüberliegenden Oberflächen der Sorptionsmittel (1,2) ein flüssiges oder gasförmiges Zwischenraummedium oder Vakuum befindet, in dem die Mischungskomponenten lösbar und/oder dispergierbar und/oder in das sie verdampfbar sind, und sich die zwei Oberflächen der Sorptionsmittel (1,2) bei im wesentlichen gleichbleibendem Abstand parallel zueinander in entgegengesetzter Richtung bewegen, und man die auf den Sorptionsmitteln befindlichen aufgetrennten Komponenten des Gemisches nach Zurücklegen der Trennstrecke gewinnt.

2. Verfahren nach Anspruch 1, dadurch gekennzeichnet, daß die Sorptionsmittel hinsichtlich ihrer Polarität, geometrischen Anordnung von bindenden Funktionen, Porengröße, Viskosität, Temperatur und/oder elektrischer Ladung unterscheiden.

3. Verfahren nach Anspruch 2, dadurch gekennzeichnet, daß sich die Sorptionsmittel (1,2) auf einem Träger (4,5) befinden.

4. Verfahren nach Anspruch 3, dadurch gekennzeichnet, daß die Träger (4,5) ebene oder gekrümmte Bänder oder Scheiben sind oder Teil einer Zylinder- oder Kugeloberfläche darstellen.

5. Verfahren nach Anspruch 3, dadurch gekennzeichnet, daß die Träger durch die Wände von Vertiefungen (81,82,91,92) gebildet werden, die sich in parallel zueinander liegenden Oberflächen (4,5), insbesondere in zwei sich in gegenläufiger Richtung zueinander drehenden zylinderförmigen Röhren (83, 84, 93, 94) befinden und sich senkrecht zur Laufrichtung, im Falle von zylinderförmigen Röhren parallel zur Zylinderachse erstrecken, wobei die Zylinderröhren konzentrisch ineinander (83,84) (mit gemeinsamer Drehachse) oder übereinander (93,94) (mit gemeinsamer Drehachse und gleicher Grundfläche) angeordnet sind und die Vertiefungen (81,82,91,92) in den sich gegenüberliegenden Flächen der Zylinderröhren (83,84,93,94) so angebracht sind, daß sie sich bei der gegenläufigen Drehbewegung der beiden Zylinderröhren abwechselnd in einer Position befinden, in der ihre Öffnungen (85,86,95,96) gegenüberliegen, und in einer Position, in der ihre Öffnungen (85,86,95,96) einer Rohrwand gegenüberliegen, in der sich keine Vertiefungen (81,82,91,92) befinden.

6. Verfahren nach Anspruch 5, dadurch gekennzeichnet, daß die Vertiefungen (81,82) von sich gegenüberliegenden Oberflächen, insbesondere von konzentrisch ineinander angeordneten Zylinderröhren (83,84) Strömungsumlenkeinrichtungen (103,104) enthalten, die in bestimmten Abständen an den zur Zylinderrohrachse parallelen Flächen der Vertiefungen so angeordnet sind, daß sie die Strömungsrichtung eines parallel zur Zylinderrohrachse strömenden Zwischenraummediums so ändern, daß dieses, wenn sich die Vertiefungen gegenüberstehen, im Laufe des Durchströmens der Vertiefungen abwechselnd von einer Vertiefung (81, 101) in die gegenüberliegende Vertiefung (82, 102) strömt.

7. Verfahren nach Anspruch 5 oder 6, dadurch gekennzeichnet, daß die Strömung des Zwischenraum-mediums mittels eines Umwälzsystems (123) hergestellt wird, wobei jeder einzelnen Vertiefung (81,82,121,122) mindestens einer oder beider gegenüberliegenden Oberflächen ein Umwälzsystem (123) zugeordnet ist.

8. Verfahren nach einem der Ansprüche 1 bis 7, dadurch gekennzeichnet, daß die Temperatur der Sorptonsmittel verschieden sein kann und/oder ein Temperaturgradient in Richtung der Trennstrecke vorliegt.

9. Verfahren nach einem oder mehreren der Ansprüche 1 bis 8, dadurch gekennzeichnet, daß man im kontinuierlichen Verfahren durch Variation jeweils einzelner Parmeter Änderungen des Trennergebnisses bestimmt und durch Abstimmung aufeinander die gesamten Trennparameter in kontinuierlicher Weise optimiert.

10. Verfahren nach Anspruch 9, dadurch gekennzeichnet, daß die Bestimmung durch Messung der IR-Absorption, des Brechungsindex, des optischen Drehwertes, der UV-Absorption, der Polarisierbarkeit und/oder der Dielektrizitätskonstante erfolgt.

11. Vorrichtung zur Durchführung des Verfahrens nach einem der Ansprüche 1 bis 10, dadurch gekennzeichnet, daß die Vorrichtung zwei unterschiedliche Sorptionsmittel (1,2), und einen Trennraum (3) zwischen zwei Oberflächen der Sorptionsmittel (1,2), in dem sich ein flüssiges oder gasförmiges Zwischenraummedium oder Vakuum befindet, in dem die Mischungskomponenten lösbar und/oder dispergierbar und/oder in das sie verdampfbar sind, wobei die Sorptionsmittel (1,2) so angeordnet sind, daß sich die zwei Oberflächen der Sorptionsmittel (1,2) bei im wesentlichen gleichbleibendem Abstand parallel zueinander in entgegengesetzter Richtung bewegen, sowie eine Auftragseinrichtung (10) zur Zuführung des zu trennenden Stoffgemisches in den Trennraum (3) oder auf die Sorptionsmittel (1,2) über im wesentlichen den gesamten zur Bewegungsrichtung senkrechten Bereich, und eine Austrageinrichtung zur Gewinnung der aufgetrennten Fraktionen des Gemisches nach einer bestimmten zurückgelegten Trennstrecke durch Desorption oder Elution umfaßt.

12. Vorrichtung nach Anspruch 11, dadurch gekennzeichnet, daß die Sorptionsmittel (1,2) auf einem Träger (4,5) aufgebracht sind.

13. Vorrichtung nach Anspruch 12, dadurch gekennzeichnet, daß die Träger (4,5) ebene oder gekrümmte Bänder oder Scheiben sind, oder Teil einer Zylinder- oder Kugeloberfläche.

14. Vorrichtung nach Anspruch 12, dadurch gekennzeichnet, daß die Träger durch die Wände von Vertiefungen (81,82,91,92) gebildet werden, die sich in parallel zueinander liegenden Oberflächen (4,5), insbesondere in zwei sich in gegenläufiger Richtung zueinander drehenden zylinderförmigen Röhren (83, 84, 93, 94) befinden und sich senkrecht zur Laufrichtung, im Falle von zylinderförmigen Röhren parallel zur Zylinderachse erstrecken, wobei die Zylinderröhren konzentrisch ineinander (83,84) (mit gemeinsamer Drehachse) oder übereinander (93,94) (mit gemeinsamer Drehachse und gleicher Grundfläche) angeordnet sind und die Vertiefungen (81,82,91,92) in den sich gegenüberliegenden Flächen der Zylinderröhren (83,84,93,94) so angebracht sind, daß sie sich bei der gegenläufigen Drehbewegung der beiden Zylinder abwechselnd in einer Position befinden, in der ihre Öffnungen (85,86,95,96) gegenüberliegen, und in einer Position, in der ihre Öffnungen (85,86,95,96) einer Rohrwand gegenüberliegen, in der sich keine Vertiefungen (81,82,91,92) befinden.

15. Vorrichtung nach Anspruch 14, dadurch gekennzeichnet, daß die Vertiefungen (81,82) Strömungsumlenk-einrichtungen (103,104) enthalten, die in bestimmten Abständen an den Flächen der Vertiefungen so angeordnet sind, daß sie die Strömungsrichtung eines strömenden Zwischenraummediums so ändern, daß dieses, wenn sich die Vertiefungen gegenüberstehen, im Laufe des Durchströmens der Vertiefungen abwechselnd von einer Vertiefung (81, 101) in die gegenüberliegende Vertiefung (82, 102) strömt.

16. Vorrichtung nach Anspruch 14 oder 15, dadurch gekennzeichnet, daß die Strömung des Zwischenraummediums mittels eines Umwälzsystems (123) hergestellt wird, wobei jeder einzelnen Vertiefung (81,82,121,122) mindestens einer oder beider gegenüberliegenden Oberflächen ein Umwälzsystem (123) zugeordnet ist.

17. Vorrichtung nach einem der Ansprüche 11 bis 16, dadurch gekennzeichnet, daß sie Einrichtungen zur Detektion der aufgetrennten Fraktionen enthält, die sich an einer oder mehreren Stellen der Trennstrecke oder Trennfläche in geeigneter Distanz und Anordnung zu den Sorptionsmitteln (1,2) befinden, oder auch einer Austrageinrichtung nachgeschaltet sein können.

18. Vorrichtung nach Anspruch 17, dadurch gekennzeichnet, daß die Detektionseinrichtung eine Einrichtung zur Messung der IR-Absorption, des Brechungsindex, des optischen Drehwertes, der UV-Absorption, der Polarisierbarkeit und/oder der Dielektrizitätskonstante ist.

## Claims

1. Method for separating a mixture of substances by sorption of the mixture components by different sorbents whose sorption properties can be individually adjusted independently of each other and by passing the sorbents with the ad- or absorbed mixture components through a separating section, wherein the mixture of the substances to be separated is placed in the gap (3) between two surfaces of the sorbents (1, 2) or is placed on the sorbents, wherein the placing in or on takes place over essentially the entire area perpendicular to the direction of movement, wherein between the opposed surfaces of the sorbents (1, 2) there is a liquid or gaseous gap medium or vacuum, in which the components of the mixture can be dissolved and/or dispersed and/or into which they can be vapourized, and wherein the two surfaces of the sorbents (1, 2) move parallel to each other in opposite directions with an essentially constant distance apart and wherein the separated components of the mixture on the sorbents are recovered after the separating section has been passed through.

2. Method as claimed in Claim 1, characterised in that the sorbents differ in their polarity, geometrical arrangement of binding functions, pore size, viscosity, temperature and/or electric charge.

3. Method as claimed in Claim 2, characterised in that the sorbents (1, 2) are located on a carrier (4,5).

4. Method as claimed in Claim 3, characterised in that the carriers (4,5) are flat or curved strips or discs or represent part of a cylindrical or spherical surface.

5. Method as claimed in Claim 3, characterised in that the carriers are formed by the walls of recesses (81,82,91,92) which are located in surfaces (4, 5) parallel to each other, especially in two cylindrical tubes (83,84,93,94) rotating in opposite directions to each other and which extend perpendicularly to the direction of movement, in the case of cylindrical tubes extend parallel to the cylinder axis, wherein the cylindrical tubes are arranged concentrically one inside the other (83,84) (with a common axis of rotation) or one above the other (93,94) (with a common axis of rotation and the same base area), and the recesses (81,82,91,92) are arranged in the opposite faces of the cylindrical tubes (83, 84,93,94) in such a way that, with contrary rotational movement of the two cylindrical tubes, the said recesses are alternately located in a position in which their openings (85,86, 95, 96) are opposite, and in a position in which their openings (85, 86, 95, 96) are opposite a tube wall in which there are no recesses (81, 82, 91, 92).

6. Method as claimed in Claim 5, characterised in that the recesses (81, 82) in opposite surfaces, especially of concentric cylindrical tubes (83, 84) arranged one inside the other, contain flow deflection devices (103, 104), so arranged at specified intervals on the faces of the recesses parallel to the axis of the cylindrical tubes that they alter the direction of a flow of a gap medium flowing parallel to the cylinder-tube axis in such a way that, when the recesses are opposite, in the course of flowing through the recesses, the medium alternately flows from one recess (81, 101) into the opposite recess (82, 102).

7. Method as claimed in Claim 5 or 6, characterised in that the flow of the gap medium is produced by a circulating system (123), wherein a circulating system (123) is associated with each individual recess (81, 82, 121, 122) of at least one or both opposite surfaces.

8. Method as claimed in Claims 1 to 7, characterised in that the temperature of the sorbents can be different and/or there is a temperature gradient in the direction of the separating section.

9. Method as claimed in one or more of Claims 1 to 8, characterised in that, in a continuous process, changes in the separation results are determined by varying the individual parameters and in that, by matching them to each other, all the separation parameters are optimised in a continuous manner.

10. Method as claimed in Claim 9, characterised in that determination takes place by measuring the IR absorption, refractive index, optical rotation-value, UV absorption, polarizability and/or dielectric constant.

11. Apparatus for implementing the method as claimed in one of Claims 1 to 10, characterised in that the apparatus comprises two different sorbents (1,2) and a gap (3) between two surfaces of the sorbents (1, 2), in which there is a liquid or gaseous gap medium or vacuum, in which the mixture components can be dissolved and/or dispersed and/or into which they can be vapourized, wherein the sorbents (1,2) are so arranged that the two surfaces of the sorbents (1,2) move parallel to each other in opposite directions with an essentially constant distance apart and an application device (10) for delivering the mixture of substances to be separated into the gap (3) or onto the sorbents (1, 2) over essentially the entire area perpendicular to the direction of movement, and a discharge device for recovering the separated fractions of the mixture by desorption or elution after a specified separating section has been passed through.

12. Apparatus as claimed in Claim 11, characterised in that the sorbents (1,2) are applied to a carrier (4, 5).

13. Apparatus as claimed in Claim 12, characterised in that the carriers (4, 5) are flat or curved strips or discs, or a part of a cylindrical or spherical surface.

14. Apparatus as claimed in Claim 12, characterised in that the carriers are formed by the walls of recesses (81, 82, 91, 92) which are located in surfaces (4, 5) parallel to each other, especially in two cylindrical tubes (83, 84, 93, 94) rotating in opposite directions to each other and which extend perpendicularly to the direction of movement, in the case of cylindrical tubes extend parallel to the cylinder axis, wherein the cylindrical tubes are arranged concentrically one inside the other (83, 84) (with a common axis of rotation) or one above the other (93, 94) (with a common axis or rotation and the same base area), and the recesses (81, 82, 91, 92) are arranged in the opposite faces of the cylindrical tubes ( 83,84,93,94) in such a way that, with contrary rotational movement of the two cylindrical tubes, the said recesses are alternately located in a position in which their openings (85, 86, 95, 96) are opposite, and in a position in which their openings (85, 86, 95, 96) are opposite a tube wall in which there are no recesses (81, 82, 91, 92).

15. Apparatus as claimed in Claim 14, characterised in that the recesses (81, 82) contain flow deflection devices (103, 104), arranged at specified intervals on the faces of the recesses in such a way that they alter the direction of flow of a flowing gap medium in such a way that, when the recesses are opposite, in the course of flowing through the recesses, the medium flows alternately from one recess (81, 101) into the opposite recess (82, 102).

16. Apparatus as claimed in Claims 14 or 15, characterised in that the flow of the gap medium is produced by a circulating system (123), wherein a circulating system (123) is associated with each individual recess (81, 82, 121, 122) of at least one or both opposite surfaces.

17. Apparatus as claimed in one of Claims 11 to 16, characterised in that it contains devices for detecting the separated fractions, located at one or more points of the separating section or separating plane, at a suitable distance and arragement in relation to the sorbents (1,2) or can be located after a discharge device.

18. Apparatus as claimed in Claim 17, characterised in that the detection device is a device for measuring IR absorption, refractive index, optical rotational-value, UV absorption, polarizability and/or dielectric constant.

## Revendications

1. Procédé pour la separation d'un mélange de substances par sorption des composants du mélange sur des agents de sorption différents, réglables indépendamment l'un de l'autre, individuellement du point de vue de leurs caractéristiques de sorption, et par le parcours d'une distance de séparation des agents de sorption avec les composants du mélange absorbés; le mélange de substances à séparer étant introduit dans la chambre de séparation (3) entre deux surfaces des agents de sorption (1, 2) ou appliqué sur les agents de sorption, l'introduction ou l'application s'effectuant essentiellement sur la totalité de la région perpendiculaire à la direction de mouvement, un milieu de l'espace intermédiare liquide ou gazeux ou un vide se trouvant entre les surfaces des agents de sorption (1, 2) situées l'une en face de l'autre, dans léquel les composants du mélange sont solubles et/ou dispersables et/ou vaporisables, et les deux surfaces des agents de sorption ( 1, 2) se déplaçant parallèlement l'un par rapport a l'autre en sens opposé tout en maintenant une distance essentiellement constante, et les composants séparés du mélange se trouvant sur les agents de sorption étant récoupérés après avoir parcouru la distance de séparation.

2. Procédé selon la revendication 1, caractérisé en ce que les agents de sorption se distinguent du point de vue de leur polarité, de leur disposition géométrique des fonctions de liaison, de leur taille des pores, de leur viscosité, de leur température et/ou de leur charge électrique.

3. Procédé selon la revendication 2, caractérisé en ce que les agents de sorption (1, 2) se trouvent sur un support (4,5).

4. Procédé selon la revendication 3, caractérisé en ce que les supports ( 4, 5) sont des bandes ou des disques plans ou incurvés ou représentent une partie d'une surface cylindrique ou sphérique.

5. Procédé selon la revendication 3, caractérisé en ce que les supports sont formés par les parois de creux (81,82,91,92) qui se trouvent dans des surfaces parallèles entre elles (4,5), particulièrement dans deux tuyaux cylindriques (83, 84, 93, 94) tournant en sens opposé l'un par rapport à l'autre et qui s'étendent perpendiculairement par rapport à la direction de mouvement, dans le cas de tuyaux cylindriques parallèlement par rapport à l'axe du cylindre, les tuyaux cylindriques étant disposés de manière concentrique l'un dans l'autre (83,84) (avec un axe de rotation commun) ou superposés (93, 94) (avec un axe de rotation commun et une surface de base identique) et les creux (81,82,91,92) étant placés dans les surfaces opposées des tuyaux cylindriques (83, 84, 93, 94) de telle manière qu'lls se trouvent dans le cas d'un mouvement rotatif opposé des deux tuyaux cylindriques alternativement dans une position dans laquelle leurs ouvertues (85, 86, 95, 96) se trouvent l'une en face de l'autre, et dans une position dans laquelle leurs ouvertures (85,86,95,96) se trouvent en face d'une paroi du tuyau dans laquelle ne se trouvent pas de creux (81,82,91,92).

6. Procédé selon la revendication 5, caractérisé en ce que les creux (81, 82) de surfaces opposées l'une à l'autre, particulièrement de tuyaux cylindriques (83,84) disposés de manière concentrique l'un dans l'autre contiennent des dispositifs de déviation de l'écoulement (103, 104), qui sont placés à des distances déterminées sur les surfaces des creux parallèles à l'axe du tuyau cylindrique, de telle manière qu'ils changent la direction d'écoulement d'un milieu de l'espace intermédiaire s'écoulant parallèlement à l'axe du tuyau cylindrique de telle manière que, au cours de l'écoulement à travers les creux, lorsque les creux se trouvent en position opposée, le milieu de l'espace intermédiaire s'écoule alternativement d'un creux (81, 101) dans le creux opposé (82, 102).

7. Procédé selon la revendication 5 ou 6, caractérisé en ce que l'écoulement du milieu de l'espace intermédiaire est réalisé grâce à un système de circulation (123), un système de circulation (123), étant attribué à chaque creux individuel (81, 82, 121, 122) d'au moins une ou des deux surfaces opposées.

8. Procédé selon une des revendications 1 à 7, caractérisé en ce que la température des agents de sorption peut être différente et/ou qu'un gradient de température existe dans la direction de la distance de séparation.

9. Procédé selon une ou plusieurs des revendications 1 à 8, caractérisé en ce qu'on détermine dans le procédé continu, par variation des paramètres individuels respectifs, les changements des résultats de la séparation et qu'on optimise de manière continue par adaptation mutuelle les paramètres de séparation globaux.

10. Procédé selon la revendication 9, caractérisé en ce que la détermination est effectuée par mesure de l'absorption IR, de l'indice de réfraction, de la valeur de rotation optique, de l'absorption UV, de la polarisabilité et/ou de la constante diélectrique.

11. Dispositif pour la réalisation du procédé selon une des revendications 1 à 10, caractérisé en ce que le dispositif englobe deux agents de sorption différents (1,2) et une chambre de séparation (3) entre deux surfaces des agents de sorption (1, 2), dans laquelle se trouve un milieu de l'espace intermédiaire liquide ou gazeux ou un vide, dans lequel les composants du mélange sont solubles et/ou dispersables et/ou vaporisables, les agents de sorption (1, 2) étant placés de telle manière que les deux surfaces des agents de sorption (1, 2) se déplacent parallèlement l'une par rapport à l'autre en sens opposé tout en maintenant une distance essentiellement constante, de même qu'un dispositif d'application (10) pour l'alimentation du mélange de substances à séparer dans la chambre de séparation (3) ou sur les agents de sorption (1, 2) sur essentiellement la totalité de la région perpendiculaire à la direction de mouvement, et un dispositif de décharge pour la récupération des fractions séparées du mélange par désorption ou par élution aprés une distance de séparation parcourue déterminée.

12. Dispositif selon la revendication 11, caractérisé en ce que les agents de sorption (1,2) sont appliqués sur un support (4, 5).

13. Dispositif selon la revendication 12, caractérisé en ce que les supports ( 4, 5) sont des bandes ou des disques plans ou incurvés, ou représentent une partie d'une surface cylindrique ou sphérique.

14. Dispositif selon la revendication 12, caractérisé en ce que les supports sont formés par les parois de creux (81, 82, 91, 92) qui se trouvent dans des surfaces parallèles entre elles (4,5), particulièrement dans deux tuyaux cylindriques (83, 84, 93, 94) tournant en sens opposé l'un par rapport à l'autre et qui s'étendent perpendiculairement par rapport à la direction de mouvement, dans le cas de tuyaux cylindriques parallèlement par rapport à l'axe du cylindre, les tuyaux cylindriques étant disposés de manière concentrique l'un dans l'autre (83, 84) (avec un axe de rotation commun) ou superposés (93, 94) (avec un axe de rotation commun et une surface de base identique) et les creux (81, 82, 91, 92) étant placés dans les surfaces opposées des tuyaux cylindriques (83, 84, 93, 94) de telle manière qu' ils se trouvent dans le cas d'un mouvement rotatif opposé des deux cylindres alternativement dans une position dans laquelle leurs ouvertures (85, 86, 95, 96) se trouvent l'une en face de l'autre, et dans une position dans laquelle leurs ouvertures ( 85, 86, 95, 96) se trouvent en face d'une paroi du tuyau dans laquelle ne se trouvent pas de creux (81, 82, 91, 92).

15. Dispositif selon la revendication 14, caractérisé en ce que les creux (81, 82) contiennent des dispositifs de déviation de l'écoulement (103, 104), qui sont placés à des distances déterminées sur les surfaces des creux, de telle manière qu'ils changent la direction d'écoulement d'un milieu de l'espace intermédiare en écoulement de telle manière, au cours de l'écoulement à travers les creux, lorsque les creux se trouvent en position opposée, le milieu de l'espace intermédiaire s'écoule alternativement d'un creux (81, 101) dans le creux opposé (82, 102).

16. Dispositif selon la revendication 14 ou 15, caractérisé en ce que l'écoulement du milieu de l'espace intermédiaire est réalisé grâce à un système de circulation (123), un système de circulation (123) étant attribué à chaque creux individuel (81, 82, 121, 122) d'au moins une ou des deux surfaces opposées.

17. Dispositif selon une des revendications 11 à 16, caractérisé en ce qu'il contient des installations pour la détection des fractions séparées, qui se trouvent à un ou à plusieurs endroits de la distance de séparation ou de la surface de séparation à une distance et dans une disposition appropriées par rapport aux agents de sorption ( 1, 2) ou qui peuvent également suivre un dispositif de décharge.

18. Dispositif selon la revendication 17, caractérisé en ce que l'installation de détection est une installation pour la mesure de l'absorption IR, de l'indice de réfraction, de la valeur de rotation optique, de l'absorption UV, de la polarisabilité et/ou de la constante diélectrique.
